# FASCICULE DE BREVET EUROPEEN

(11) **EP 0 491 612 B1**
(45) Date de publication et mention de la délivrance du brevet: **17.04.1996**
(21) Numéro de dépôt: 91403405.3
(22) Date de dépôt: 16.12.1991
(51) Int. Cl.: B60N 2/18

(54) **Appui-cuisses**
Schenkelstütze
Thigh support

(30) Priorité: 19.12.1990 FR 9015919
(43) Date de publication de la demande: 24.06.1992
(73) Titulaire: BERTRAND FAURE AUTOMOBILE "B.F.A.", F-91300 Massy (FR)
(72) Inventeur: Lebrun, Jean, F-61100 La Lande Patry (FR)
(74) Mandataire: Madeuf, René Louis

(56) Documents cités:
- EP-A- 0 226 557
- EP-A- 0 380 670
- DE-A- 4 013 679
- FR-A- 1 179 759
- US-A- 2 919 744
- US-A- 2 920 684
- PATENT ABSTRACTS OF JAPAN vol. 5, no. 93 (M-74)(765) 17 Juin 1981 & JP-A-56 039 928 (NISSAN MOTOR CO.) 15 Avril 1981

## Description

La présente invention a pour objet un mécanisme supportant un coussin appui-cuisses placé à l'avant d'un siège en particulier d'un siège de véhicules terrestres, nautiques et aériens.

Le siège d'un véhicule doit être étudié de façon à fournir un confort maximum pour l'utilisateur, éviter la fatigue de celui-ci et, du fait que la morphologie de chaque utilisateur est différente, on est amené à prévoir sur chaque siège un dossier, et une assise comportant des moyens de réglage permettant de mettre le siège en accord avec la morphologie du passager considéré.

Si, jusqu'à présent, on a prévu des dossiers permettant de régler l'inclinaison d'avant en arrière et d'arrière en avant comportant des coussins lombaires réglables et des têtières également réglables, l'assise est plus difficile à régler car elle est maintenue en place par un seul coussin. Un dispositif connu depuis fort longtemps permet de régler l'assiette de l'assise du siège, mais pour parfaire son réglage, on envisage aujourd'hui d'avoir un coussin sur l'avant de l'assise supportant les cuisses du passager de façon à régler la longueur de l'assise en fonction de la longueur des cuisses du passager.

La présente invention a pour objet de créer un coussin appui-cuisses réglable en position et situé à l'avant de l'assise, son réglage pouvant être effectué soit manuellement, soit à l'aide d'un organe moteur, comme par exemple un moteur électrique.

A ce sujet, on connaît déjà par DE-A-4 013 679 un mécanisme supportant un coussin appui-cuisses placé à l'avant d'un siège et qui permet le déplacement du coussin appui-cuisses d'avant en arrière et d'arrière en avant.

Par rapport au mécanisme ci-dessus, la présente invention réside dans l'utilisation de deux caissons en U coulissant l'un dans l'autre et elle est caractérisée en ce que le mécanisme comporte un bâti inférieur solidaire de l'assise du siège et en forme de U, les ailes du bâti comportant des fenêtres guidant des axes solidaires d'un châssis en forme de U renversé enveloppant le bâti et portant le coussin appui-cuisses, tandis qu'un élément de réglage permet le déplacement d'avant en arrière et d'arrière en avant du châssis solidaire du coussin appui-cuisses afin de régler la position de ce coussin en rapport avec la morphologie du passager assis sur le siège.

Diverses autres caractéristiques de l'invention ressortent d'ailleurs de la description détaillée qui suit.

Des formes de réalisation de l'objet de l'invention sont représentées, à titre d'exemples non limitatifs, aux dessins annexés.
La fig. 1 est une vue en plan de l'armature portant le coussin appui-cuisses.
La fig. 2 est une coupe suivant la ligne II-II de la fig. 1.
La fig. 3 est une coupe suivant la ligne III-III de la fig. 1.
La fig. 4 est un plan de l'armature d'un coussin appui-cuisses à commande électro-mécanique.
La fig. 5 est une coupe suivant la ligne V-V de la fig. 4.
La fig. 6 est une coupe suivant la ligne VI-VI de la fig. 4.

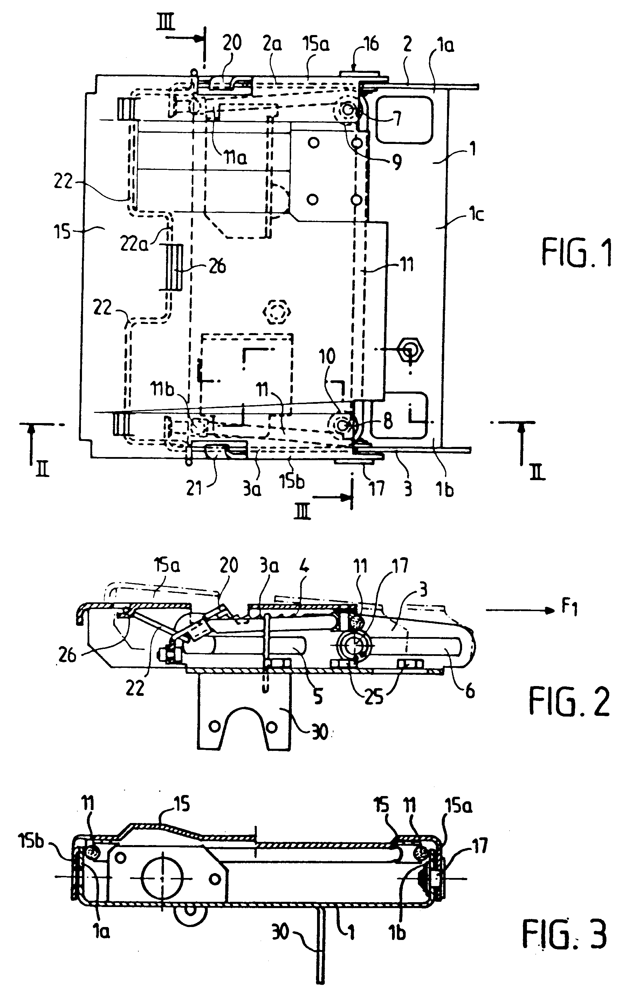

A la fig. 1, on a représenté un bâti fixe 1 solidaire de l'armature de l'assise du siège. Le bâti 1 est en forme de U et présente, sur ses deux côtés latéraux 1a, 1b, deux ailes 2, 3 dont les parties arrière 2a, 3a présentent chacune la forme d'une crémaillère 4 (fig. 2). De plus, il est prévu, dans les ailes 2 et 3, des fenêtres 5, 6 disposées dans un même plan les unes derrière les autres et dont la longueur correspond à la longueur du déplacement du coussin appui-cuisses.

Comme on peut le voir aux fig. 1 et 2, le fond 1c du bâti fixe 1 comporte des axes 7, 8 sur lesquels sont montés des galets 9, 10 destinés à guider un élément élastique 11 de type sandow qui est attaché par ses extrémités 11a, 11b à un châssis 15 en forme de U renversé et qui peut se déplacer par rapport au bâti fixe 1 en l'enveloppant du fait que les ailes rabattues 15a, 15b du châssis 15 sont guidées par des axes 16, 17 dans les fenêtres arrière 6 du bâti 1. Les axes 16, 17 sont maintenus, par des moyens connus en soi, par exemple par des rondelles, enserrant les ailes 2, 3 tout en permettant un glissement aisé des axes 16, 17 par rapport au bâti 1. Il est prévu, de plus, sous la face supérieure du châssis 15 des crevés rabattus 20, 21 qui coopèrent avec les dentures des crémaillères 4 de façon à ce que ces crevés 20, 21 pénètrent tour à tour dans les dents des crémaillères 4, lors du mouvement de coulissement, dans le sens de la flèche F₁ (voir fig. 2). Finalement, des ressorts 22 assurent l'abaissement du châssis 15 sur le bâti 1.

Ainsi, pour régler la position du coussin appui-cuisses solidaire de la partie supérieure du châssis 15, on est amené, comme le montre la fig. 2, à soulever ce coussin et le châssis 15 pour dégager les crevés 20, 21 des dentures 4 des crémaillères afin que le coussin se déplace, soit dans le sens de la flèche F₁ (voir fig. 2) c'est-à-dire que le coussin recule par rapport à l'assise du siège, soit au contraire dans le sens inverse de la flèche F₁ pour ramener le coussin appui-cuisses vers l'assise du siège sous l'effet de l'élastique 11 qui ramène vers l'avant l'ensemble du coussin de l'appuicuisses.

25 désigne des organes permettant la fixation du bâti fixe 1 sur l'armature de l'assise du siège.

Finalement, il y a lieu de noter que le ressort de rappel 22 est maintenu dans sa partie centrale 22a par un crevé 26 solidaire du châssis 15.

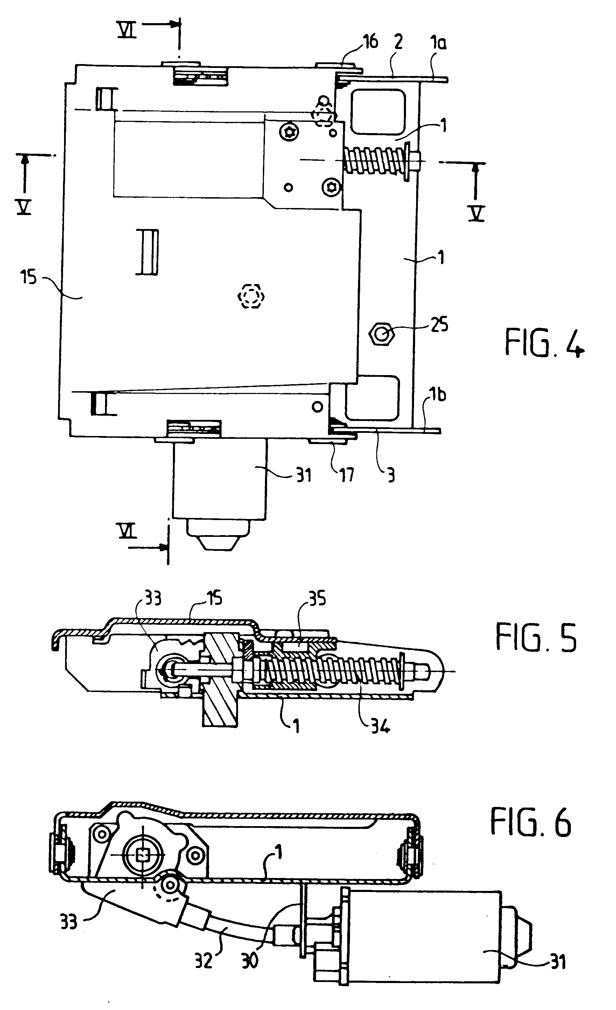

Aux fig. 4 à 6, la constitution de l'armature du coussin appui-cuisses est identique à celle décrite dans les fig. 1 à 3 et porte donc les mêmes références, mais la partie inférieure du bâti 1 comporte une patte 30 (également visible aux fig. 2 et 3) destinée à la fixation d'un moteur 31 qui, par l'intermédiaire d'un arbre flexible 32, actionne un réducteur à engrenages 33 commandant la rotation d'une vis-mère 34 qui, coopérant avec un écrou prisonnier 35 solidaire du dessus du châssis 15, permet l'avancement ou le recul du châssis 15 portant le coussin appui-cuisses.

Ce moteur 31, qui peut être électrique, pneumatique ou hydraulique, est actionné par l'intermédiaire d'une commande appropriée et, dans certains cas, un microprocesseur enregistre la position choisie à l'avance par le passager considéré, position qui peut être gardée en mémoire à l'aide, par exemple, d'une puce ou d'une carte à mémoire détenue par le passager.

## Revendications

1. Mécanisme supportant un coussin appui-cuisses placé à l'avant d'un siège, qui permet le déplacement du coussin appui-cuisses d'avant en arrière et d'arrière en avant, ce mécanisme étant caractérisé en ce qu'il comporte un bâti inférieur (1) solidaire de l'assise du siège et en forme de U, les ailes (1a, 1b) du bâti (1) comportant des fenêtres (6) guidant des axes (16, 17) solidaires d'un châssis (15) en forme de U renversé enveloppant le bâti (1) et portant le coussin appui-cuisses, tandis qu'un élément de réglage permet le déplacement d'avant en arrière et d'arrière en avant du châssis (15) solidaire du coussin appui-cuisses afin de régler la position de ce coussin en rapport avec la morphologie du passager assis sur le siège.

2. Mécanisme suivant la revendication 1, caractérisé en ce que l'élément de réglage est constitué par deux crémaillères (4), portées par la partie supérieure des ailes (1a, 1b) du bâti (1) et qui coopèrent avec deux crevés rabattus (20, 21) solidaires du châssis mobile (15), tandis qu'un élément élastique (11) en U, attaché par ses extrémitées libres au châssis (1) et guidé par des galets (9, 10), solidaires du bâti mobile (15), aide au déplacement du châssis (15) puis finalement un ressort (22) en U, fixé par sa partie centrale (22a) au châssis (15), tend à abaisser ce dernier sur le bâti (1) en enclenchant ainsi les crevés rabattus (20, 21) dans les dents des crémaillères (4).

3. Mécanisme suivant la revendication 1, caractérisé en ce qu'un moteur (31), dont l'alimentation est sous controle électronique, entraîne par un réducteur (33) une vis-mère (34) portant un écrou prisonnier (35) solidaire du châssis (15), afin de pouvoir faire coulisser ce dernier par rapport au bâti (1), soit en avant soit en arrière, de manière à régler la position du châssis (15) et donc, du coussin appui-cuisses.

## Claims

1. Mechanism supporting a thigh-rest cushion located at the front of a seat, for displacing the thigh-rest cushion from front to rear and from rear to front, this mechanism being characterized in that it comprises a lower frame member (1) fixedly connected to the sitting portion of the seat and having a U-shape, the side portions (1a, 1b) of the frame member (1) having cutouts (6) for the guiding of pins (16, 17) fixedly connected to a chassis (15) having an inverted U-shape, surrounding the frame (1) and carrying the thigh-rest cushion, while an adjusting element enables the displacement from front to rear and from rear to front of the chassis (15) fixedly connected to the thigh-rest cushion, so as to adjust the position of this thigh-rest cushion to morphology of a passenger seated in the seat.

2. Mechanism according to claim 1, characterized in that the adjusting element comprises two racks (4), carried by the upper part of the side portions (1a, 1b) of the frame member (1) and which cooperate with two projections (20, 21) fixedly connected to the movable chassis (15), while a U-shaped resilient element (11), with free ends thereof being connected to the chassis (1) and guided by rollers (9, 10), fixedly connected to the mobile frame member (15), is used for assisting displacement of the chassis (15), then finally a U-shaped spring (22), connected by its central portion (22a) to the chassis (15), is used for forcing the latter down on the frame member (1), thereby engaging the projections (20, 21) into the teeth of the racks (4).

3. Mechanism according to claim 1, characterized in that a motor (31), the supply of which is under an electronic control, drives, via a reducing unit (33), a threaded spindle (34) carrying a guide nut (35) fixedly connected to the chassis (15) for sliding the latter relative to the frame member (1) either frontwardly or rearwardly, so as to adjust the position of the chassis (15) and therefore the thigh-rest cushion.

## Patentansprüche

1. Tragmechanismus für eine vor einem Sitz angeordnete Schenkelstütze, der die Verstellung der Schenkelstütze von vorne nach hinten und von hinten nach vorne ermöglicht,
**gekennzeichnet durch**
ein unteres Gehäuse (1), das mit der Grundplatte des Sitzes verbunden und U-förmig ausgebildet ist, wobei die Schenkel (1a, 1b) des Gehäuses (1) Ausschnitte (6) aufweisen, die Achsen (16, 17) führen, die mit einem Rahmen (15) in Form eines umgekehrten U verbunden sind, der das Gehäuse (1) umgibt und die Schenkelstütze trägt, während ein Einstellelement die Verstellung von vorne nach hinten und von hinten nach vorne des Rahmens (15) ermöglicht, der mit der Schenkelstütze verbunden ist, um die Position der Schenkelstütze entsprechend den Körpermaßen des auf dem Sitz sitzenden Fahrgastes einzustellen.

2. Mechanismus nach Anspruch 1,
**dadurch gekennzeichnet**, **daß**
das Einstellelement aus zwei Zahnstangen (4) besteht, die vom oberen Teil der Schenkel (1a, 1b) des Gehäuses (1) getragen werden, und die mit zwei abgebogenen Einschnitten (20, 21) zusammenwirken, die mit dem beweglichen Gehäuse (15) verbunden sind, während ein elastisches, U-förmiges Element (11), das mit seinen freien Enden am Rahmen (1) befestigt und durch Rollen (9, 10) geführt ist, die mit dem beweglichen Gehäuse (15) verbunden ist, die Verstellung des Gehäuses (15) unterstützt, und daß schließlich eine U-förmige Feder (22), die mit ihrem zentralen Teil (22a) am Rahmen (15) befestigt ist, das Bestreben hat, letzteren auf das Gehäuse (1) abzusenken, um so die abgebogenen Einschnitte (20, 21) mit den Zähnen der Zahnstangen (4) in Eingriff zu bringen.

3. Mechanismus nach Anspruch 1,
**dadurch gekennzeichnet**, **daß**
ein Motor (31), dessen Speisung elektronisch gesteuert wird, durch ein Untersetzungsgetriebe (33) eine Schraubenspindel (34) antreibt, die eine Spindelmutter (35) trägt, die mit dem Gehäuse (15) verbunden ist, um letztere bzgl. des Gehäuses (1) nach vorne oder nach hinten derart gleiten lassen zu können, daß die Position des Rahmens (15) und damit der Schenkelstütze eingestellt wird.
